# FASCICULE DE BREVET EUROPEEN

(11) **EP 3 492 756 B1**
(45) Date de publication et mention de la délivrance du brevet: **21.12.2022**
(21) Numéro de dépôt: 18209423.5
(22) Date de dépôt: 30.11.2018
(51) Int. Cl.: F16B 1/00, F15B 15/10, F16J 15/46

(54) **PROCÉDÉ DE CENTRAGE D'UNE PREMIÈRE PIÈCE MÉCANIQUE ET D'UNE DEUXIÈME PIÈCE MÉCANIQUE L'UNE PAR RAPPORT À L'AUTRE**
ZENTRIERVERFAHREN EINES ERSTEN MECHANISCHEN WERKSTÜCKS UND EINES ZWEITEN MECHANISCHEN WERKSTÜCKS IN BEZUG AUFEINANDER
METHOD FOR CENTRING A FIRST MECHANICAL MEMBER AND A SECOND MECHANICAL MEMBER RELATIVE TO THE OTHER

(30) Priorité: 04.12.2017 FR 1761610
(43) Date de publication de la demande: 05.06.2019
(73) Titulaire: L'AIR LIQUIDE, SOCIETE ANONYME POUR L'ETUDE ET L'EXPLOITATION DES PROCEDES GEORGES CLAUDE, 75007 Paris (FR); Centre National d'Etudes Spatiales, 75039 Paris Cedex 01 (FR)
(72) Inventeur: DURAND, Fabien, 38340 Voreppe (FR); COLEIRO, Gaêtan, 38000 Grenoble (FR)
(74) Mandataire: Germain Maureau

(56) Documents cités:
- WO-A1-2014/088278
- WO-A1-2014/111183
- DE-A1-102015 000 731
- FR-A1- 2 002 563
- US-A- 2 725 078
- US-A- 3 435 733
- US-A- 5 315 912
- US-B1- 6 309 106

## Description

La présente invention concerne les méthodes de centrage d'une pièce mécanique par rapport à une autre pièce mécanique. Par exemple, la présente invention peut concerner le centrage d'un piston par rapport à une chemise de piston dans un compresseur ou générateur d'onde de pression qui peut être de type sol ou spatial.

Dans la présente invention, nous illustrerons l'invention notamment à travers l'exemple du centrage d'un piston dans une chemise, mais cet exemple est non limitatif et peut être appliqué à tout autre couple de pièces mécaniques nécessitant un centrage l'une par rapport à l'autre.

Dans le domaine de l'automobile, on ne cherche pas à centrer les pistons moteurs par rapport à leur chemise, en revanche des jeux réduis sont pourtant utilisés. La solution est de lubrifier constamment le piston de manière à limiter les frottements du piston et par conséquent à minimiser les frottements pour prévenir l'usure et la perte d'énergie.

La présente invention vise un objectif par lequel il n'existe plus aucun contact entre le piston et la chemise en fonctionnement et donc un centrage parfait quelle que soit son utilisation (dynamique ou statique) et/ou son domaine d'application sol ou spatial. Pour certaines applications nécessitant de longues durées de fonctionnement sans maintenance et/ou pour des raisons de pollution, il est préférable que le piston se déplace dans sa chemise sans lubrifiant et sans contact. Cette exigence nécessite un système de centrage qui ne dégrade ni le gaz dans le compresseur comprenant le piston ni le compresseur en lui-même. Or, lorsqu'on lubrifie en continu en injectant de l'huile dans le système, le gaz est contaminé et vient perdre de ses propriétés, et, en fonction des températures d'application, l'huile pourrait se solidifier ou se vaporiser, ce qui engendrerait un blocage du piston ou une augmentation d'huile dans le gaz. Dans le cas d'un contact et/ou de frottements entre le piston et sa chemise des copeaux sont générés, ce qui réduit les performances du système de compresseur. Dans les deux derniers cas cités, les performances du compresseur et de systèmes connexes seront affectées. De plus, pour des raisons d'étanchéité et de rendement, le jeu entre le piston et sa chemise doit être très réduit et de l'ordre de 10 µm à 50 µm au rayon. Ces contraintes impliquent et requièrent un centrage/alignement quasi parfait d'autant plus dans le cas d'un compresseur où le piston décrit un mouvement linéaire.

Il y a deux grands types de méthode de centrage parmi lesquels il existe notamment un premier type de centrage dit statique et un deuxième type de centrage dit dynamique qui peuvent être réalisés par palier magnétique ou palier gaz.

La méthode de centrage statique est plus simple à mettre en œuvre que la méthode de centrage dynamique. Une solution de centrage statique consiste insérer le piston dans sa chemise, le centrer dans la chemise et le fixer en générant un minimum de contraintes pour ne pas altérer le centrage réalisé précédemment. Dans cette méthode statique le centrage peut être réalisé dans un premier temps, par un clinquant qui comble une partie du jeu entre le piston et la chemise, puis dans un second temps, le piston est par exemple collé pour le maintenir en position et pour finir le clinquant est retiré lorsque la colle est sèche. Le clinquant pourrait être remplacé par un palier magnétique ou un palier gaz. Cette méthode statique présente l'inconvénient d'avoir un centrage garanti en statique mais lorsque le piston est mis en fonctionnement, le piston pourrait se décentrer et venir au contact de la chemise si la solution de maintien ne remplit pas totalement son rôle. En outre, dès lors que l'on souhaite remplacer la solution de maintien avec colle par une solution de maintien avec des vis, un effort radial vient s'appliquer sur le piston qui peut alors venir pincer le clinquant, ce qui peut générer des résidus lors du retrait du clinquant et surtout un décentrage compte tenu de l'effort radial exercé par les vis.

Par ailleurs, cette méthode statique avec clinquant présente également l'inconvénient des limites physiques quant à la finesse de centrage par rapport au diamètre et également par rapport à la longueur. Par exemple, on tombe à 10 µm de jeu minimum au rayon pour un piston de diamètre de 10 mm et 25 µm de jeu minimum au rayon pour un piston de diamètre 30 mm. En outre, dans le cas de jeu réduit, il n'est pas possible de fixer le piston par serrage mécanique car sans venir pincer le clinquant qui ne peut ensuite pas être retiré proprement et/ou on vient déformer le piston qui risque de venir en contact avec la chemise après le retrait du clinquant. Enfin, dans certains cas, il est difficile d'accéder au piston pour réaliser le centrage ou l'alignement.

Il est connu du document DE10 2015 000731 un agencement avec un outil portatif tel un souffleur tenu à la main. L'outil comprend un boîtier sur lequel est agencée une poignée Sur le manche, un levier de commande est monté pivotant. Un tube de soufflante 5 est formé sur le boîtier, à travers lequel une unité de soufflante achemine un flux d'air soufflé. L'outil est porté par l'opérateur via un dispositif de support comprenant une plaque de maintien sur laquelle est positionné un dispositif de connexion. Le dispositif de connexion comprend une broche de connexion fixée à un premier point de fixation sur une plaque de retenue et à un deuxième point de fixation sur l'outil. Le dispositif de connexion comprend en outre un soufflet.

L'invention a pour but de remédier à tout ou partie des inconvénients précités et notamment à permettre un centrage quasi-parfait en statique et en dynamique du piston par rapport à la chemise tout en réalisant un serrage mécanique du piston.

À cet effet, l'invention a pour objet un procédé de centrage d'une première pièce mécanique et d'une deuxième pièce mécanique l'une par rapport à l'autre selon la revendication 1,

L'invention permet de centrer la première pièce mécanique et la deuxième pièce mécanique l'une par rapport à l'autre par déformation élastique ciblée. Ce procédé est avantageux car lors de la fixation de la première pièce mécanique, même s'il y a des efforts radiaux qui s'exercent sur la première pièce mécanique risquant de dégrader le centrage puisque que grâce à la déformation élastique de la pièce de centrage, ces efforts sont compensés. En outre, grâce à cette déformation, on peut atteindre une précision de centrage bien plus avantageuse que dans ce procédé de centrage statique classique, car on vient combler entièrement le jeu entre le piston et la chemise et la déformation se fait de manière uniforme tout autour du piston.

Selon l'invention, le fluide peut être un liquide ou un gaz, préférentiellement des gaz ou liquides neutres et non polluants.

Optionnellement et selon l'invention, la première pièce mécanique et la deuxième pièce mécanique ne sont pas en contact l'une avec l'autre après positionnement.

Selon une forme de réalisation de l'invention, la fixation de la première pièce mécanique est réalisée par vissage et/ou collage et/ou frettage et/ou soudage.

Selon une première forme de réalisation de l'invention, la déformation au moins partiellement réversible est une déformation réalisée par chauffage au moins partiel de la pièce de centrage.

Selon la première forme de réalisation, si la pièce de centrage est la première pièce mécanique, alors on chauffe la pièce de centrage qui se dilate thermiquement jusqu'au contact avec la deuxième pièce mécanique. Avantageusement selon la première forme de réalisation, dès qu'il y a un contact entre la pièce de centrage et la deuxième pièce mécanique, un transfert de chaleur s'opère qui engendre la dilatation thermique de la deuxième pièce mécanique. Après dilatation thermique (déformation partiellement irréversible), on fixe au moins la première pièce mécanique et un refroidissement des pièces s'opère de sorte que la pièce de centrage et la deuxième pièce mécanique dilatées reviennent partiellement ou totalement à leur état initial sans contact.

Selon la première forme de réalisation, si la pièce de centrage est la deuxième pièce mécanique, alors on chauffe la pièce de centrage qui se dilate thermiquement jusqu'au contact avec la première pièce mécanique. Avantageusement selon la première forme de réalisation, dès qu'il y a un contact entre la pièce de centrage et la première pièce mécanique, un transfert de chaleur s'opère qui engendre la dilatation thermique de la première pièce mécanique. Après dilatation thermique (déformation partiellement irréversible), on fixe au moins la première pièce mécanique et un refroidissement des pièces s'opère de sorte que la pièce de centrage et la première pièce mécanique dilatées reviennent partiellement ou totalement à leur état initial sans contact.

Selon un mode de réalisation particulier ne faisant pas partie de l'invention, si la pièce de centrage est une troisième pièce mécanique distincte de la première pièce mécanique et de la deuxième pièce mécanique, alors on chauffe la pièce de centrage qui se dilate thermiquement jusqu'au contact avec la première pièce mécanique et/ou la deuxième pièce mécanique. Avantageusement selon la première forme de réalisation, dès qu'il y a un contact entre la pièce de centrage et la première pièce mécanique et/ou la deuxième pièce mécanique, un transfert de chaleur s'opère qui engendre la dilatation thermique de la première pièce mécanique et/ou la deuxième pièce mécanique. Après dilatation thermique (déformation partiellement réversible), on fixe au moins la première pièce mécanique et un refroidissement des pièces s'opère de sorte que la pièce de centrage et la première pièce mécanique et/ou la deuxième pièce mécanique dilatées reviennent partiellement ou totalement à leur état initial sans contact.

Avantageusement, dans le cas de la première forme de réalisation, la déformation est partiellement réversible car la ou les pièces dilatées sont susceptibles de revenir totalement ou partiellement à leur état initial.

Selon une deuxième forme de réalisation, la déformation au moins partiellement réversible est une déformation élastique par introduction de fluide au moins partiellement dans la pièce de centrage, le procédé comprenant une étape d'introduction de fluide dans la pièce de centrage avant l'étape de déformation et une étape de retrait de fluide mise en œuvre après l'opération de fixation.

Avantageusement, le retrait de fluide limite/annule les détériorations des pièces.

Avantageusement, dans le cas de la deuxième forme de réalisation, la déformation est complètement réversible car la ou les pièces déformées sont susceptibles de revenir totalement à leur état initial.

Selon une forme de réalisation de l'invention, l'introduction de fluide est réalisée par un outillage configuré pour introduire un fluide dans la pièce de centrage.

Selon une forme de réalisation de l'invention, le retrait de fluide est réalisé par un outillage configuré pour retirer le fluide de la pièce de centrage, après centrage de la première pièce mécanique avec la deuxième pièce mécanique.

Selon une forme de réalisation de l'invention, l'outillage pour introduire le fluide dans la pièce de centrage est un cylindre dont les dimensions sont conformées à la dimension de la chambre intérieure ménagée dans le corps de la pièce de centrage.

Selon une forme de réalisation de l'invention, l'outillage comprend une entrée de fluide pour introduire et retirer le fluide.

Selon une forme de réalisation de l'invention, l'outillage comprend en outre des canaux agencés en regard de la paroi latérale de la chambre intérieure et préférentiellement en regard des rainures ménagées dans la chambre intérieure de manière à cibler l'introduction du fluide dans les zones déterminées de déformation.

Selon une première configuration de l'invention, la pièce de centrage est constituée par la première pièce mécanique.

Selon la première configuration de l'invention, la première pièce mécanique comprend un orifice d'entrée et de sortie de fluide.

Selon la première configuration de l'invention, la première pièce mécanique comprend un corps comprenant une chambre intérieure communiquant fluidiquement avec l'orifice d'entrée et de sortie de fluide, la chambre étant destinée à contenir du fluide.

Selon la première configuration de l'invention, la chambre intérieure est délimitée par au moins une paroi latérale destinée à se déformer élastiquement par pression du fluide à l'intérieur de la chambre.

Avantageusement, l'outillage permet en coopération avec la pièce de centrage de réaliser le centrage en créant des déformations au niveau des zones souhaitées.

Selon la première configuration de l'invention, la pièce de centrage comprend au moins un premier amincissement définissant la première zone déterminée de déformation. Avantageusement, le au moins un amincissement est un amincissement de l'épaisseur de la paroi latérale de la chambre, ce qui facilite la déformation de cette zone déterminée de déformation par rapport au reste de la paroi.

Selon la première configuration de l'invention, la pièce de centrage comprend une pluralité d'amincissements et préférentiellement deux amincissements.

Selon la première configuration de l'invention, chaque amincissement se présente sous la forme de rainure.

Selon la première configuration de l'invention, le premier amincissement et le deuxième amincissement définissent respectivement la première zone déterminée de déformation et une deuxième zone déterminée de déformation.

Selon la première configuration de l'invention, le premier amincissement et le deuxième amincissement sont positionnés à une distance prédéterminée sur la pièce de centrage.

Selon la première configuration de l'invention, la distance prédéterminée correspond à une longueur de centrage ou longueur d'étanchéité dans laquelle le ratio longueur de centrage sur distance est strictement supérieur à 0.5 (L/D>0.5). La distance prédéterminée doit être déterminée afin d'éviter l'apparition de rotulage c'est-à-dire que plus les deux amincissements sont proches, plus la liaison aura tendance à permettre la rotation hors de l'axe de révolution du piston. Par exemple, si la longueur de centrage désirée est de 60 mm, la distance entre la première zone déterminée de déformation et la deuxième zone déterminée de déformation sera de 60mm.

Selon une deuxième configuration de l'invention, la pièce de centrage est constituée par la deuxième pièce mécanique.

Selon la deuxième configuration de l'invention, la deuxième pièce mécanique comprend un orifice d'entrée et de sortie de fluide.

Selon la deuxième configuration de l'invention, la deuxième pièce mécanique comprend un corps comprenant une chambre intérieure communiquant fluidiquement avec l'orifice d'entrée et de sortie de fluide, la chambre étant destinée à contenir du fluide.

Selon la deuxième configuration de l'invention, la chambre intérieure est délimitée par au moins une paroi latérale destinée à se déformer élastiquement par pression du fluide à l'intérieur de la chambre.

Selon la deuxième configuration de l'invention, la pièce de centrage comprend au moins une première rainure définissant la première zone déterminée de déformation élastique. Avantageusement, le au moins un amincissement est un amincissement de l'épaisseur de la paroi latérale de la chambre, ce qui facilite la déformation de cette zone déterminée par rapport au reste de la paroi.

Selon la deuxième configuration de l'invention, la pièce de centrage comprend une pluralité d'amincissements et préférentiellement deux amincissements.

Selon la deuxième configuration de l'invention, chaque amincissement se présente sous la forme de rainure.

Selon la deuxième configuration de l'invention, le premier amincissement et le deuxième amincissement définissent respectivement la première zone déterminée de déformation et une deuxième zone déterminée de déformation.

Selon la deuxième configuration de l'invention, le premier amincissement et le deuxième amincissement sont positionnés à une distance prédéterminée sur la pièce de centrage.

Selon la deuxième configuration de l'invention, la distance prédéterminée correspond à une longueur de centrage ou longueur d'étanchéité dans laquelle le ratio longueur de centrage sur distance est strictement supérieur à 0.5 (L/D>0.5). La distance prédéterminée doit être déterminée afin d'éviter l'apparition de rotulage c'est-à-dire que plus les deux amincissements sont proches, plus la liaison aura tendance à permettre la rotation hors de l'axe de révolution du piston. Par exemple, si la longueur de centrage désirée est de 60 mm, la distance entre la première zone déterminée de déformation et la deuxième zone déterminée de déformation sera de 60mm.

Selon une troisième configuration ne faisant pas partie de l'invention, la pièce de centrage est constituée par une bague déformable élastiquement.

Selon la troisième configuration ne faisant pas partie de l'invention, la pièce de centrage est montée sur la première pièce mécanique avant insertion de la première pièce dans la deuxième pièce mécanique.

Selon la troisième configuration ne faisant pas partie de l'invention, la pièce de centrage est déformée élastiquement une fois la première pièce mécanique positionnée par rapport à la deuxième pièce mécanique.

Selon la troisième configuration ne faisant pas partie de l'invention, la pièce de centrage est totalement déformée élastiquement.

Selon la troisième configuration ne faisant pas partie de l'invention, la pièce de centrage est positionnée sur la première pièce mécanique au niveau d'une portion prédéterminée de la première pièce mécanique.

Selon la troisième configuration ne faisant pas partie de l'invention, l'ensemble de pièces comprend au moins une deuxième pièce de centrage positionnée sur la première pièce mécanique et à distance de la première pièce de centrage.

Selon la troisième configuration ne faisant pas partie de l'invention, chaque pièce de centrage comprend une zone déterminée de déformation configurée pour se déformer élastiquement lors du centrage de la première pièce mécanique et de la deuxième pièce mécanique.

Selon la troisième configuration ne faisant pas partie de l'invention, la distance prédéterminée correspond à une longueur de centrage ou longueur d'étanchéité dans laquelle le ratio longueur de centrage sur distance est strictement supérieur à 0.5 (L/D>0.5). La distance prédéterminée doit être déterminée afin d'éviter l'apparition de rotulage c'est-à-dire que plus les deux rainures sont proches, plus la liaison aura tendance à permettre la rotation hors de l'axe de révolution du piston. Par exemple, si la longueur de centrage désirée est de 60 mm, la distance entre la première zone déterminée de déformation et la deuxième zone déterminée de déformation sera de 60mm.

Selon une quatrième configuration de l'invention, l'ensemble de pièces mécaniques comprend au moins une première pièce de centrage constituée par la première pièce mécanique et une deuxième pièce de centrage constituée par la deuxième pièce mécanique. Dans la quatrième configuration, la première pièce de centrage comprend au moins une première zone déterminée de déformation élastique et la deuxième pièce de centrage comprend au moins une deuxième zone déterminée de déformation élastique configurée pour venir au contact de la première zone de déformation élastique de la première pièce de centrage.

L'invention a également pour objet un ensemble de pièces mécaniques caractérisé en ce qu'il comprend au moins une première pièce mécanique, une deuxième pièce mécanique, au moins une pièce de centrage, la pièce de centrage étant constituée par la première pièce mécanique ou par la deuxième pièce mécanique, ladite pièce de centrage étant configurée pour se déformer élastiquement au moins en partie par introduction de fluide au moins partielle dans la pièce de centrage, la première pièce mécanique et la deuxième pièce mécanique étant centrée l'une par rapport à l'autre, préférentiellement par le procédé selon l'invention.

Ainsi, la déformation élastique de la pièce de centrage permet le centrage de la première pièce mécanique par rapport à la deuxième pièce mécanique.

Avantageusement, le centrage de la première pièce mécanique et de la deuxième pièce mécanique de l'ensemble de pièces mécaniques est réalisé par le procédé de centrage selon l'invention.

Selon une forme de réalisation de l'invention, la première pièce mécanique est agencée dans la deuxième pièce mécanique.

Selon une forme de réalisation de l'invention, la première pièce mécanique est de forme globalement cylindrique.

Selon une forme de réalisation de l'invention, la deuxième pièce mécanique est de forme globalement cylindrique.

Selon une forme de réalisation de l'invention, la première pièce mécanique est sensiblement coaxiale avec la deuxième pièce mécanique. Avantageusement, selon l'invention l'axialité de la première mécanique par rapport à la deuxième pièce mécanique est dépendante des tolérances entre lesdites deux pièces mécaniques.

Selon une forme de réalisation de l'invention, l'ensemble de pièces mécaniques est intégré dans un compresseur.

Selon une forme de réalisation de l'invention, la première pièce mécanique est un piston.

Selon une forme de réalisation de l'invention, la deuxième pièce mécanique est une chemise de piston.

L'invention a également pour objet une machine de compression, par exemple compresseur linéaire, préférentiellement pour cryorefroidisseur d'engin spatial, caractérisé en ce qu'il comprend un ensemble de pièces mécaniques selon l'invention.

Selon une forme de réalisation de l'invention, la machine de compression comprend au moins un carter, au moins un premier piston, une chemise de piston délimitant une chambre de compression, dans laquelle est logé le premier piston, la chemise étant fixée au carter et le premier piston étant mobile dans la chambre de compression, le premier piston étant solidaire d'un aimant, la première pièce mécanique de l'ensemble de pièces mécaniques correspondant à la chemise délimitant la chambre de compression, la deuxième pièce mécanique de l'ensemble correspondant au premier piston, le premier piston étant centré par rapport à la chemise selon le procédé de centrage selon l'invention.

L'invention sera mieux comprise, grâce à la description ci-après, qui se rapporte à des modes de réalisation selon la présente invention, donnés à titre d'exemples non limitatifs et expliqués avec référence aux figures schématiques annexées. Les figures schématiques annexées sont listées ci-dessous :
- La figure 1 est une vue en coupe schématique de l'ensemble de pièces mécaniques selon une première configuration de l'invention dans laquelle la pièce de centrage est constituée par le piston, la vue représente l'étape d'introduction de fluide du procédé de centrage,
- La figure 2 est une vue en coupe schématique de l'ensemble de pièces mécaniques selon une première configuration, la vue représente l'étape de centrage avec déformation élastique de la pièce de centrage,
- La figure 3 est une vue en coupe de l'ensemble représenté aux figures 1 et 2 avec un outillage de centrage,
- La figure 4 est une vue en coupe schématique de l'ensemble de pièces mécaniques selon une deuxième configuration de l'invention dans laquelle la pièce de centrage est constituée par la chemise, la vue représente l'étape d'introduction de fluide du procédé de centrage,
- La figure 5 est une vue en coupe schématique de l'ensemble de pièces mécaniques selon une deuxième configuration, la vue représente l'étape de centrage avec déformation élastique de la pièce de centrage,
- La figure 6 est une vue en coupe schématique de l'ensemble de pièces mécaniques selon une troisième configuration ne faisant pas partie de l'invention, dans laquelle la pièce de centrage est constituée par une multitude de pièces qui ne sont ni le piston ni la chemise, la vue représente l'étape d'introduction de fluide du procédé de centrage,
- La figure 7 est une vue en coupe schématique de l'ensemble de pièces mécaniques selon une troisième configuration ne faisant pas partie de l'invention, la vue représente l'étape de centrage avec déformation élastique de la pièce de centrage,
- La figure 8 est une vue en coupe schématique de l'ensemble de pièces mécaniques selon une quatrième configuration de l'invention dans laquelle la pièce de centrage est constituée par le piston et la chemise, la vue représente l'étape d'introduction de fluide du procédé de centrage.

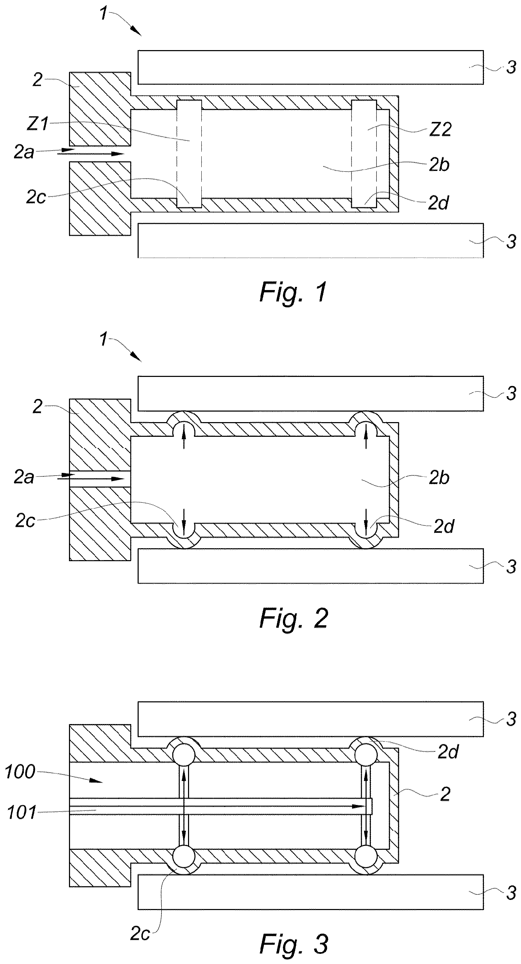

Seule la forme de réalisation portant sur la déformation partiellement réversible par introduction et retrait du fluide est illustrée aux figures 1 à 8. Le même principe s'applique à une déformation partiellement réversible notamment par expansion thermique.

L'invention porte sur un ensemble de pièces mécaniques 1 comprenant au moins une première pièce mécanique 2, une deuxième pièce mécanique 3, au moins une pièce de centrage, la pièce de centrage étant constituée par la première pièce mécanique 1 ou par la deuxième pièce mécanique 2 selon respectivement une première configuration et une deuxième configuration.

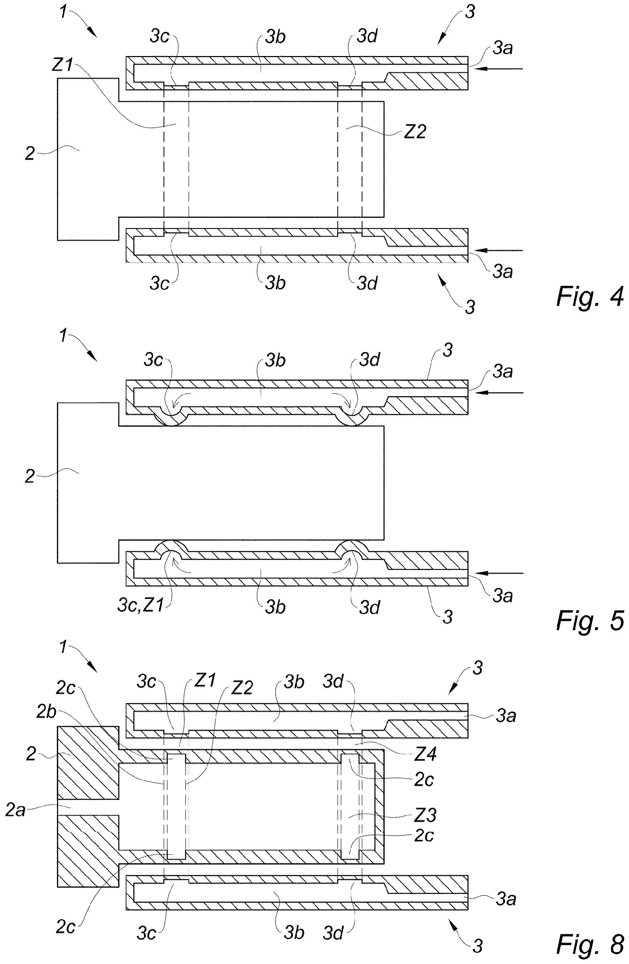

Quelle que soit la configuration, le procédé de centrage de la première pièce mécanique 2 et de la deuxième pièce mécanique 3 l'une par rapport à l'autre, est le même : ladite pièce de centrage est configurée pour se déformer élastiquement au moins en partie par introduction de fluide dans la pièce de centrage. Plus particulièrement le procédé de centrage consiste à introduire un fluide dans la pièce de centrage comme on peut le voir notamment aux figures 1 et 4. Le fluide introduit déforme élastiquement la pièce de centrage au niveau de zones déterminées de déformation comme illustré notamment aux figures 2, 5 et 7. Les zones déterminées de déformation seront détaillées par la suite. La déformation élastique de la pièce de centrage permet de centrer la première pièce mécanique 2 par rapport à la deuxième pièce mécanique 3 et vice versa lorsque la ou les zones déterminées de déformation déformées élastiquement viennent en contact avec une portion de la première pièce 2 ou de la deuxième pièce 3 dans le sens de la déformation élastique. Pour figer le centrage, on fixe la première pièce mécanique 2 par exemple par vissage et on retire le fluide de la pièce de centrage.

La première configuration de l'ensemble de pièces mécaniques 1 va maintenant être détaillée en référence aux figures 1 à 3. Dans la première configuration de l'invention, la pièce de centrage est constituée par la première pièce mécanique 2. La première pièce mécanique 2 comprend un orifice 2a d'entrée et de sortie de fluide, un corps comprenant une chambre 2b intérieure communiquant fluidiquement avec l'orifice 2a d'entrée et de sortie de fluide, la chambre 2b étant destinée à contenir du fluide.

Selon la première configuration de l'invention, la chambre 2b intérieure est délimitée par au moins une paroi latérale destinée à se déformer élastiquement par pression du fluide à l'intérieur de la chambre 2b comme illustré en figure 2. Avantageusement, la pièce de centrage comprend une première rainure 2c définissant la première zone déterminée de déformation Z1 et une deuxième rainure 2d définissant une deuxième zone déterminée de déformation Z2. Comme la première pièce mécanique 1 est cylindrique, la première rainure 2c et la deuxième rainure sont ménagées sur la circonférence de la chambre 2b. Dans l'exemple illustré aux figures 1 à 3, la première rainure 2c et la deuxième rainure 2d s'étendent sans discontinuité autour de la chambre 2b intérieure. En variante non représentée, la première rainure 2c et la deuxième rainure 2d sont ménagées sur la circonférence de la chambre 2b intérieure mais sont discontinues ou ne sont que sur une partie de la circonférence de la chambre 2b.

Selon la première configuration de l'invention, la première rainure 2c et la deuxième rainure 2d sont positionnées à une distance prédéterminée maximum sur la pièce de centrage.

Comme illustré en figure 3 et selon la première configuration de l'invention, on utilise un outillage 100 pour introduire le fluide dans la pièce de centrage. L'outillage 100 est un cylindre plein dont les dimensions sont conformées à la dimension de la chambre 2b intérieure agencée dans le corps de la pièce de centrage. L'outillage 100 comprend une entrée de fluide 101 pour introduire et retirer le fluide. L'outillage 100 comprend en outre des canaux 102 agencés de sorte qu'ils soient en regard des rainures 2c, 2d ménagées dans la chambre 2b intérieure de manière à cibler l'introduction du fluide dans les zones déterminées de déformation Z1, Z2 comme illustrée à la figure 1. Lors de la déformation élastique, chaque zone déterminée de déformation Z1, Z2 vient en contact avec la deuxième pièce mécanique 3.

La deuxième configuration de l'ensemble de pièces mécaniques 1 va maintenant être détaillée en référence aux figures 4 et 5. La deuxième configuration diffère de la première configuration uniquement en ce que la pièce de centrage est la deuxième pièce mécanique 3, comprenant un orifice 3a d'entrée et de sortie de fluide, un corps comprenant une chambre 3b intérieure communiquant fluidiquement avec l'orifice 3a d'entrée et de sortie de fluide, la chambre 3b étant destinée à contenir du fluide. La chambre 3b intérieure est délimitée par au moins une paroi latérale destinée à se déformer élastiquement par pression du fluide à l'intérieur de la chambre 3b. La pièce de centrage comprend une première rainure 3c définissant une première zone déterminée de déformation Z1 et une deuxième rainure 3d définissant une deuxième zone déterminée de déformation Z2, comme illustré en figure 4.

Comme on peut le voir aux figures 4 et 5, la première rainure 3c et la deuxième rainure 3d sont positionnées à une distance prédéterminée sur la pièce de centrage.

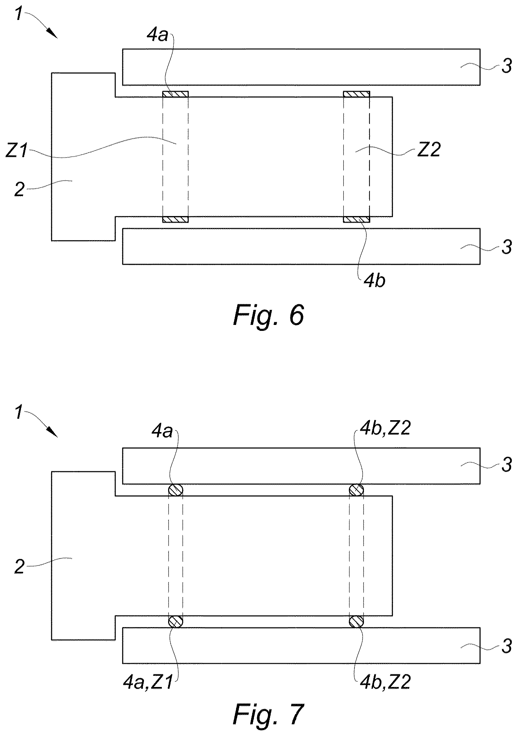

Selon la deuxième configuration de l'invention, l'outillage utilisé pour introduire le fluide dans la pièce de centrage, en l'espèce dans la deuxième pièce mécanique 3, peut être similaire à celui utilisé pour la première configuration comme illustré en figure 3 mais adapté à la deuxième pièce mécanique 3. Lors de la déformation élastique, chaque zone déterminée de déformation Z1, Z2 vient en contact avec la première pièce mécanique 2. La troisième configuration, ne faisant pas partie de l'invention, de l'ensemble de pièces mécaniques 1 va maintenant être détaillée en référence aux figures 6 et 7. La troisième configuration diffère de la deuxième configuration et de la première configuration uniquement en ce que la pièce de centrage est une bague. Plus particulièrement, dans la troisième configuration ne faisant pas partie de l'invention, l'ensemble de pièces mécaniques 1 comprend deux pièces de centrage 4a, 4b qui constituées chacune par une bague ménagée autour de la première pièce mécanique 2 comme illustré en figure 6. Chaque pièce de centrage ou bague 4a, 4b est déformable élastiquement.

Dans le cas de la troisième configuration ne faisant pas partie de l'invention, chaque pièce de centrage 4a, 4b est montée sur la première pièce mécanique 2 avant insertion de la première pièce 2 dans la deuxième pièce mécanique 3 ou les pièces de centrage 4a, 4b peuvent être montées dans la deuxième pièce mécanique 3 avant insertion de la première pièce mécanique 2 dans la deuxième pièce mécanique 3.

Selon la troisième configuration ne faisant pas partie de l'invention, chaque pièce de centrage est positionnée sur la première pièce mécanique au niveau d'une portion prédéterminée de la première pièce mécanique et à distance l'une de l'autre.

Avantageusement, dans la troisième configuration ne faisant pas partie de l'invention, chaque pièce de centrage est déformée soit par un outillage similaire aux deux configurations précédentes mais adapté aux pièces de centrage soit par une liaison directe à une source de déformation, préférentiellement de type gaz, par exemple une chambre à air. Lors de la déformation élastique, chaque bague 4a, 4b vient en contact avec la deuxième pièce mécanique 3.

La quatrième configuration de l'ensemble de pièces mécaniques 1 va maintenant être détaillée en référence à la figure 8. La quatrième configuration diffère de la première configuration, de la deuxième configuration et de la troisième configuration en ce qu'il y a deux pièces de centrages constituées respectivement par la première pièce mécanique 1 et la deuxième pièce mécanique 2. Dans cette quatrième configuration, on peut se reporter aux caractéristiques décrites pour la première configuration et pour la deuxième configuration. La première rainure 2c et la deuxième rainure 2d de la première pièce mécanique 2 définissent respectivement une première zone déterminée de déformation Z1 et une deuxième première zone déterminée de déformation Z3. La première rainure 3c et la deuxième rainure 3d de la deuxième pièce mécanique 3 définissent respectivement une première zone déterminée de déformation Z2 et une deuxième première zone déterminée de déformation Z4. Lors de la déformation élastique, la première zone déterminée de déformation Z1 de la première pièce mécanique 2et la première zone déterminée de déformation Z2 de la deuxième pièce mécanique 3 viennent en contact l'une avec l'autre ou dans une variante non représentée viennent respectivement en contact avec la deuxième pièce mécanique 3 et la première pièce mécanique 2. Lors de la déformation élastique, la deuxième zone déterminée de déformation Z3 de la première pièce mécanique 2 et la deuxième zone déterminée de déformation Z4 de la deuxième pièce mécanique 3 viennent en contact l'une avec l'autre ou dans une variante non représentée viennent respectivement en contact avec la deuxième pièce mécanique 3 et la première pièce mécanique 2.

La description des première, deuxième et quatrième configurations de l'ensemble de pièces mécaniques 1 faisant partie de l'invention fait apparaitre que la ou les pièces de centrage ont au moins une rainure, cependant, dans des variantes non illustrées, il est tout à fait possible que la ou les pièces de centrage soient dépourvues de rainure, les zones de déformation déterminées étant soit ciblées par l'outillage 100 introduit dans la pièce de centrage comme illustré en figure 3, soit non contrôlées.

En outre, la description des première, deuxième et quatrième configurations de l'ensemble de pièces mécaniques 1 faisant partie de l'invention fait apparaitre que la ou les pièces de centrage comprennent deux rainures, dans des variantes non représentées, la ou les pièces de centrage peuvent ne contenir qu'une seule rainure ou une pluralité de rainures. Dans le cas d'une pluralité de rainures, au moins une rainure doit être fonctionnelle et permettre le centrage.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention, défini par les revendications.

## Revendications

1. Procédé de centrage d'une première pièce mécanique (2) et d'une deuxième pièce mécanique (3) l'une par rapport à l'autre, le procédé de centrage comprenant les étapes suivantes :
- Positionnement de la première pièce mécanique (2) et de la deuxième pièce mécanique (3) d'un ensemble de pièces mécaniques (1) l'une par rapport à l'autre, le procédé de centrage étant **caractérisé par** les étapes de :
- Fourniture d'au moins une pièce de centrage (2c, 2d, 3c, 3d) configurée pour centrer au moins la première pièce mécanique (2) et la deuxième pièce mécanique (3) l'une par rapport à l'autre, la pièce de centrage (2c, 2d, 3c, 3d) étant constituée de la première pièce mécanique (2) et/ou la deuxième pièce mécanique (3),
- Déformation au moins partiellement réversible de la pièce de centrage (2, 3,), la déformation au moins partiellement réversible étant ciblée sur au moins une première zone déterminée de déformation (Z1, Z2) de la pièce de centrage (2c, 2d, 3c, 3d),
- Centrage de la première pièce mécanique (2) et de la deuxième pièce mécanique (3) l'une par rapport à l'autre par la déformation au moins partiellement réversible d'au moins la première zone déterminée de déformation (Z1, Z2), le centrage étant réalisé lorsque ladite première zone déterminée de déformation (Z1, Z2) déformée élastiquement vient en contact avec une portion de la première pièce mécanique (2) ou de la deuxième pièce mécanique (3) dans le sens de la déformation au moins partiellement réversible, la première pièce mécanique (2) et la deuxième pièce mécanique (3) n'étant pas en contact l'une avec l'autre après le centrage,
- Fixation d'au moins l'une parmi la première pièce mécanique (2) et la deuxième pièce mécanique (3),
où la première pièce mécanique (2) est un piston d'une machine de compression, tel qu'un compresseur linéaire, préférentiellement pour cryorefroidisseur d'engin spatial, et la deuxième pièce mécanique (3) est une chemise de piston de ladite machine de compression.

2. Procédé de centrage selon la revendication 1, dans lequel la déformation au moins partiellement réversible est une déformation élastique par introduction de fluide au moins partiellement dans la pièce de centrage (2c, 2d, 3c, 3d), le procédé comprenant une étape d'introduction de fluide dans la pièce de centrage avant l'étape de déformation et une étape de retrait de fluide mise en œuvre après l'opération de fixation.

3. Procédé de centrage selon la revendication 2, l'introduction et le retrait de fluide sont réalisés par un outillage (100) configuré pour introduire un fluide dans la pièce de centrage et retirer le fluide de la pièce de centrage après centrage de la première pièce mécanique (2) avec la deuxième pièce mécanique (3).

4. Procédé de centrage selon la revendication 1, dans lequel la déformation au moins partiellement réversible est une déformation réalisée par chauffage au moins partiel de la pièce de centrage (2c, 2d, 3c, 3d).

5. Procédé selon l'une quelconque des revendications 1 à 4, dans lequel la fixation est réalisée par vissage et/ou collage et/ou frettage et/ou soudage.

6. Ensemble de pièces mécaniques (1) comprenant au moins une première pièce mécanique (2), une deuxième pièce mécanique (3), au moins une pièce de centrage (2c, 2d, 3c, 3d), l'ensemble de pièces mécaniques étant **caractérisé en ce que** la pièce de centrage est constituée par la première pièce mécanique (2) et/ou par la deuxième pièce mécanique (3) ladite pièce de centrage (2c, 2d, 3c, 3d) étant configurée pour se déformer de manière partiellement réversible au moins en partie, la première pièce mécanique (2) et la deuxième pièce mécanique (3) étant centrée l'une par rapport à l'autre, par le procédé selon l'une quelconque des revendications 1 à 5.

7. Ensemble selon la revendication 6, dans lequel la pièce de centrage comprend au moins un premier amincissement (2c ou 2d; 3c ou 3d) définissant la première zone déterminée de déformation.

8. Ensemble selon la revendication 7, dans lequel la pièce de centrage comprend deux amincissements (2c, 2d, 3c, 3d), le premier amincissement (2c, 3c) et le deuxième amincissement (2d, 3d) définissent respectivement la première zone déterminée de déformation (Z1) et une deuxième zone déterminée de déformation (Z2).

9. Ensemble selon l'une quelconque des revendications 6 à 8, la première pièce mécanique (2) est sensiblement coaxiale avec la deuxième pièce mécanique (3).

10. Machine de compression, par exemple compresseur linéaire, préférentiellement pour cryorefroidisseur d'engin spatial, **caractérisé en ce qu'**il comprend un ensemble de pièces mécaniques (1) selon l'une quelconque des revendications 6 à 9.

11. Machine de compression selon la revendication 10, comprenant au moins un carter, au moins un premier piston, une chemise de piston délimitant une chambre de compression, dans laquelle sont logés le premier piston, la chemise étant fixée au carter et le premier piston étant mobile dans la chambre de compression, le premier piston étant solidaire d'un aimant, la première pièce mécanique (2) de l'ensemble de pièces mécaniques (1) correspondant à la chemise délimitant la chambre de compression, la deuxième pièce mécanique (3) de l'ensemble correspondant au premier piston, le premier piston étant centré par rapport à la chemise selon le procédé de centrage selon l'une quelconque des revendications 1 à 5.

## Patentansprüche

1. Zentrierverfahren eines ersten mechanischen Werkstücks (2) und eines zweiten mechanischen Werkstücks (3) zueinander, wobei das Zentrierverfahren die folgenden Schritte umfasst:
- Positionieren des ersten mechanischen Werkstücks (2) und des zweiten mechanischen Werkstücks (3) einer Einheit an mechanischen Werkstücken (1) zueinander, wobei das Zentrierverfahren durch die folgenden Schritte gekennzeichnet ist:
- Bereitstellen von mindestens einem Zentrierstück (2c, 2d, 3c, 3d), das konfiguriert ist, um mindestens das erste mechanische Werkstück (2) und das zweite mechanische Werkstück (3) zueinander zu zentrieren, wobei das Zentrierstück (2c, 2d, 3c, 3d) aus dem ersten mechanischen Werkstück (2) und/oder dem zweiten mechanischen Werkstück (3) erstellt ist,
- Mindestens teilweise umkehrbares Verformen des Zentrierstücks (2, 3), wobei das mindestens teilweise umkehrbare Verformen auf mindestens eine erste bestimmte Verformungszone (Z1, Z2) des Zentrierstücks (2c, 2d, 3c, 3d) abzielt,
- Zentrieren des ersten mechanischen Werkstücks (2) und des zweiten mechanischen Werkstücks (3) in Bezug zueinander durch das mindestens teilweise umkehrbare Verformen mindestens der ersten bestimmten Verformungszone (Z1, Z2), wobei das Zentrieren durchgeführt wird, wenn die erste bestimmte elastisch verformte Verformungszone (Z1, Z2) in Kontakt mit einem Abschnitt des ersten mechanischen Werkstücks (2) oder des zweiten mechanischen Werkstücks (3) in der Richtung der mindestens teilweise umkehrbaren Verformung tritt, wobei das erste mechanische Werkstück (2) und das zweite mechanische Werkstück (3) nach dem Zentrieren nicht in Kontakt miteinander sind,
- Fixieren von mindestens einem aus dem ersten mechanischen Werkstück (2) und dem zweiten mechanischen Werkstück (3),
wobei das erste mechanische Werkstück (2) ein Kolben einer Kompressionsmaschine, wie eines Linearkompressors, vorzugsweise für einen Cryokühler eines Raumfahrzeugs ist, und das zweite mechanische Werkstück (3) eine Kolbenlaufbuchse der Kompressionsmaschine ist.

2. Zentrierverfahren nach Anspruch 1, wobei das mindestens teilweise umkehrbare Verformen ein elastisches Verformen durch Einbringen von Fluid mindestens teilweise in das Zentrierstück (2c, 2d, 3c, 3d) ist, wobei das Verfahren einen Schritt zum Einbringen von Fluid in das Zentrierstück vor dem Verformungsschritt, und einen Schritt zum Entziehen von Fluid umfasst, der nach dem Fixierungsvorgang umgesetzt wird.

3. Zentrierverfahren nach Anspruch 2, wobei das Einbringen und Entziehen von Fluid durch ein Werkzeug (100) ausgeführt werden, das konfiguriert ist, um ein Fluid in das Zentrierstück einzubringen, und das Fluid nach dem Zentrieren des ersten mechanischen Werkstücks (2) mit dem zweiten mechanischen Werkstück (3) aus dem Zentrierstück zu entziehen.

4. Zentrierverfahren nach Anspruch 1, wobei das mindestens teilweise umkehrbare Verformen ein Verformen ist, das durch mindestens teilweises Erwärmen des Zentrierstücks (2c, 2d, 3c, 3d) ausgeführt wird.

5. Verfahren nach einem der Ansprüche 1 bis 4, wobei das Fixieren durch Schrauben und/oder Kleben und/oder Schrumpfen und/oder Schweißen ausgeführt wird.

6. Einheit an mechanischen Werkstücken (1), mindestens ein erstes mechanisches Werkstück (2), ein zweites mechanisches Werkstück (3), mindestens ein Zentrierstück (2c, 2d, 3c, 3d) umfassend,
wobei die Einheit an mechanischen Werkstücken **dadurch gekennzeichnet ist, dass** das Zentrierstück aus dem ersten mechanischen Werkstück (2) und/oder aus dem zweiten mechanischen Werkstück (3) erstellt ist, wobei das Zentrierstück (2c, 2d, 3c, 3d) konfiguriert ist, um sich mindestens zum Teil teilweise umkehrbar zu verformen, wobei das erste mechanische Werkstück (2) und das zweite mechanische Werkstück (3) durch das Verfahren nach einem der Ansprüche 1 bis 5 zueinander zentriert sind.

7. Einheit nach Anspruch 6, wobei das Zentrierstück mindestens eine erste Ausdünnung (2c oder 2d; 3c oder 3d) umfasst, die die erste bestimmte Verformungszone definiert.

8. Einheit nach Anspruch 7, wobei das Zentrierstück zwei Ausdünnungen (2c, 2d, 3c, 3d) umfasst, wobei die erste Ausdünnung (2c, 3c) und die zweite Ausdünnung (2d, 3d) jeweils die erste bestimmte Verformungszone (Z1) und eine zweite bestimmte Verformungszone (Z2) definieren.

9. Einheit nach einem der Ansprüche 6 bis 8, wobei das erste mechanische Werkstück (2) im Wesentlichen koaxial mit dem zweiten mechanischen Werkstück (3) ist.

10. Kompressionsmaschine, beispielsweise Linearkompressor, vorzugsweise für einen Cryokühler eines Raumfahrzeugs, **dadurch gekennzeichnet, dass** sie eine Einheit an mechanischen Werkstücken (1) nach einem der Ansprüche 6 bis 9 umfasst.

11. Kompressionsmaschine nach Anspruch 10, mindestens ein Gehäuse, mindestens einen ersten Kolben, eine Kolbenlaufbuchse, die eine Kompressionskammer begrenzt, in der der erste Kolben untergebracht ist, wobei die Laufbuchse an dem Gehäuse fixiert ist, und der erste Kolben in der Kompressionskammer beweglich ist, der erste Kolben fest mit einem Magneten verbunden ist, das erste mechanische Werkstück (2) der Einheit an mechanischen Werkstücken (1) der Laufbuchse entspricht, die die Kompressionskammer begrenzt, das zweite mechanische Werkstück (3) der Einheit dem ersten Kolben entspricht, wobei der erste Kolben in Bezug auf die Laufbuchse gemäß dem Zentrierverfahren nach einem der Ansprüche 1 bis 5 zentriert ist.

## Claims

1. A method for centring a first mechanical part (2) and a second mechanical part (3) relative to each other, the centring method comprising the following steps of:
- Positioning the first mechanical part (2) and the second mechanical part (3) of an assembly of mechanical parts (1) relative to each other, the centring method being **characterized by** the steps of:
- Supplying at least one centring part (2c, 2d, 3c, 3d) configured to centre at least the first mechanical part (2) and the second mechanical part (3) relative to each other, the centring part (2c, 2d, 3c, 3d) consisting of the first mechanical part (2) and/or the second mechanical part (3),
- At least partially reversible deforming the centring part (2, 3,), the at least partially reversible deformation being targeted on at least one first determined zone of deformation (Z1, Z2) of the centring part (2c, 2d, 3c, 3d),
- Centring the first mechanical part (2) and the second mechanical part (3) relative to each other by the at least partially reversible deformation of at least the first determined deformation zone (Z1, Z2), the centring being achieved when said elastically deformed first determined zone of deformation (Z1, Z2) comes into contact with a portion of the first mechanical part (2) or of the second mechanical part (3) in the direction of the at least partially reversible deformation, the first mechanical part (2) and the second mechanical part (3) not being in contact with each other after centring,
- Attaching at least one of the first mechanical part (2) and the second mechanical part (3), where the first mechanical part (2) is a piston of a compression machine, such as a linear compressor, preferably for a spacecraft cryocooler, and the second mechanical part (3) is a piston sleeve of said compression machine.

2. The centring method according to claim 1, wherein the at least partially reversible deformation is an elastic deformation by introducing fluid at least partially into the centring part (2c, 2d, 3c, 3d), the method comprising a step of introducing fluid into the centring part before the deformation step and a fluid removal step implemented after the fixing operation.

3. The centring method according to claim 2, the introduction and the removal of fluid are carried out by a tooling (100) configured to introduce a fluid into the centring part and remove the fluid from the centring part after centring the first mechanical part (2) with the second mechanical part (3).

4. The centring method according to claim 1, wherein the at least partially reversible deformation is a deformation carried out by at least partial heating of the centring part (2c, 2d, 3c, 3d).

5. The method according to any one of claims 1 to 4, wherein the fixing is carried out by screwing and/or gluing and/or shrinking and/or welding.

6. An assembly of mechanical parts (1) comprising at least one first mechanical part (2), one second mechanical part (3), at least one centring part (2c, 2d, 3c, 3d), the assembly of mechanical parts being **characterized in that** the centring part is constituted by the first mechanical part (2) and/or by the second mechanical part (3) said centring part (2c, 2d, 3c, 3d) being configured to be at least partially deformed in a partially reversible manner, the first mechanical part (2) and the second mechanical part (3) being centred with respect to each other, by the method according to any one of claims 1 to 5.

7. The assembly according to claim 6, wherein the centring part comprises at least one first thinning (2c or 2d; 3c or 3d) defining the first determined zone of deformation.

8. The assembly according to claim 7, wherein the centring part comprises two thinnings (2c, 2d, 3c, 3d), the first thinning (2c, 3c) and the second thinning (2d, 3d) respectively define the first determined zone of deformation (Z1) and a second determined zone of deformation (Z2).

9. The assembly according to any one of claims 6 to 8, the first mechanical part (2) is substantially coaxial with the second mechanical part (3).

10. A compression machine, for example a linear compressor, preferentially for a spacecraft cryocooler, **characterized in that** it comprises an assembly of mechanical parts (1) according to any one of claims 6 to 9.

11. The compression machine according to claim 10, comprising at least one casing, at least one first piston, a piston sleeve delimiting a compression chamber, in which the first piston is housed, the sleeve being fixed to the casing and the first piston being movable in the compression chamber, the first piston being secured to a magnet, the first mechanical part (2) of the assembly of mechanical parts (1) corresponding to the sleeve delimiting the compression chamber, the second mechanical part (3) of the assembly corresponding to the first piston, the first piston being centred with respect to the sleeve according to the centring method according to any one of claims 1 to 5.
